# EUROPÄISCHE PATENTANMELDUNG

(11) **EP 1 182 113 A2**
(43) Veröffentlichungstag der Anmeldung: **27.02.2002**
(21) Anmeldenummer: 01117521.3
(22) Anmeldetag: 20.07.2001
(51) Int. Cl.: B62B 3/14, B62B 5/00, A61G 5/10

(54) **Einkaufswagen für eine rollstuhlfahrende Person**

(30) Priorität: 19.08.2000 DE 10040760
(71) Anmelder: WANZL METALLWARENFABRIK GMBH, D-89336 Leipheim (DE)
(72) Erfinder: Blaha, Martin, 89335 Ichenhausen (DE); Eckert, Rainer, Dr., 73230 Kirchheim/Teck (DE)

(57) **Zusammenfassung**

Die Erfindung betrifft einen Einkaufswagen (1, 1') für eine rollstuhlfahrende Person, mit einem Fahrgestell (2), das einen Korb (8) trägt und mit einer hinten angeordneten Schiebeeinrichtung (17).

Die Erfindung zeichnet sich dadurch aus. dass der Boden (11) des Korbes (8) nach vorne abfallend angeordnet ist.

## Beschreibung

Die Erfindung betrifft einen Einkaufswagen für eine rollstuhlfahrende Person mit einem Fahrgestell, das einen Korb trägt und mit einer hinten angeordneten Schiebeeinrichtung.

Es wird vorgeschlagen, den Boden des Korbes nach vorne abfallend anzuordnen.

Bei bekannten Einkaufswagen für rollstuhlfahrende Personen ist der Boden des Korbes entweder horizontal oder nach vorne ansteigend angeordnet. Dies erschwert das Beladen des Korbes mit Ware. Bei der nun vorgeschlagenen Lösung wird das Beladen dadurch erleichtert, dass im Korb abgestellte Ware aufgrund der gewählten Neigung des Bodens immer bestrebt ist, nach vorne zu rutschen, um sich im vorderen Bereich des Korbes zu sammeln, so dass zum weiteren Beladen des Korbes immer genügend Freiraum für die Hände einer den Einkaufswagen führenden Person verbleibt. Dies erweist sich als großer Vorteil, zumal rollstuhlfahrende Personen nicht nur den Einkaufswagen, sondern auch noch den Rollstuhl fahren müssen und somit im Grunde froh sind, wenn das Beladen des Korbes mit Ware erleichtert wird.

Die Erfindung wird anhand von Ausführungsbeispielen näher erläutert. Es zeigt
- Fig. 1: zwei Einkaufswagen;
- Fig. 2 und Fig. 3: einen weiteren Einkaufswagen in Seitenansicht und in Draufsicht
sowie
- Fig. 4: zwei Einkaufswagen gemäß Fig. 2 und 3 in platzsparend ineinandergeschobener Lage.

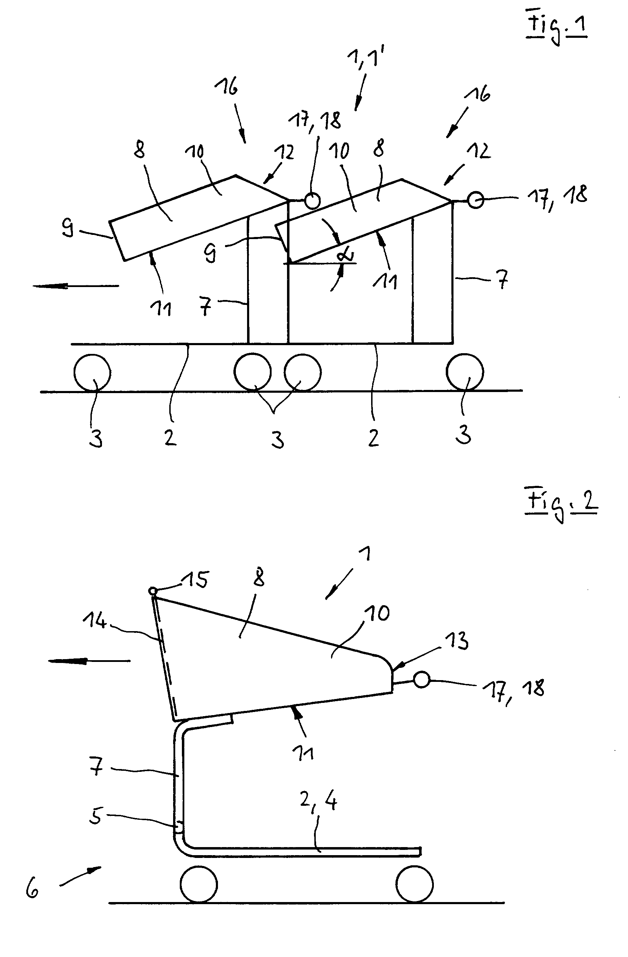

Fig. 1 zeigt zwei gleiche, für eine rollstuhlfahrende Person bestimmte Einkaufswagen 1, 1', die in bekannter Weise teilweise platzsparend ineinandergeschoben sind. Das mit Rollen 3 ausgestattete Fahrgestell 2 dieser Wagen 1, 1' ist nicht nur in bekannter Weise nach hinten offen, damit der vordere Fußbereich eines Rollstuhles in dieser Öffnung Platz findet, sondern es verjüngt sich auch in Schieberichtung (Pfeil), um das platzsparende und üblicherweise gewünschte Ineinanderschieben zu ermöglichen. Ein Ineinanderschieben der Einkaufswagen 1, 1' ist jedoch nicht Bedingung und auch nicht ausdrücklicher Bestandteil der hier vorliegenden Erfindung. Das Fahrgestell 2 der dargestellten Einkaufswagen 1, 1' weist hinten und zu beiden Seiten Stützen 7 auf, die einen Korb 8 zur Aufnahme von Ware tragen. Der Korb 8 weist vorne eine Querwand 9 auf, an die sich zu beiden Seiten zwei Seitenwände 10 anschließen, während eine hintere Querwand fehlt, so dass eine Öffnung 12 gebildet ist, von der aus sich Ware auf den nach vorne geneigten Boden 11 des Korbes 8 abstellen lässt. Die Neigung des Bodens 11 ist durch den Winkel α gekennzeichnet. Nahe der Öffnung 12, also am Einkaufswagen 1, 1' hinten, ist eine Schiebeeinrichtung 17, etwa in Form einer quer verlaufenden Griffstange 18 vorgesehen, die zum Schieben und Rangieren des Einkaufswagens 1, 1' von einem Rollstuhl aus bedienbar ist. Auf die Zeichnung bezogen befände sich der Rollstuhl rechts neben den beiden Einkaufswagen 1, 1'. Im hinteren Bereich 16 sind die beiden Seitenwände 10 in Seitenansicht betrachtet abgeflacht, damit der Korb 8 bequemer beladen werden kann. Aus der Zeichnung ist ersichtlich, dass im ineinandergeschobenen Zustand oder auch hintereinandergestellt, die Körbe der Einkaufswagen schräg geschichtet sind.

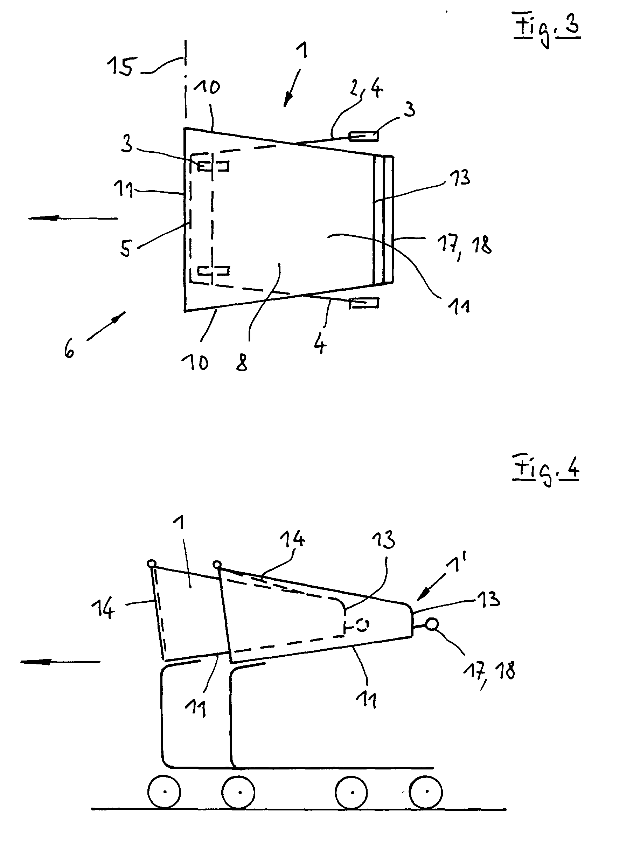

Die in den Zeichnungen Fig. 2, 3 und 4 dargestellten, für eine rollstuhlfahrende Person gedachten Einkaufswagen 1, 1' sind bewusst so gestaltet, dass diese sich platzsparend in weitere gleiche Einkaufswagen 1 einschieben lassen. Jeder der dargestellten Einkaufswagen 1, 1' weist ein in Schieberichtung (Pfeil) sich verjüngendes, nach hinten offenes Fahrgestell 2 auf, dessen beide Längsholme 4 im vorderen Bereich 6 durch eine Querverbindung 5 verbunden sind. Die Längsholme 4 sind vorne nach oben geführt, um Stützen 7 zu bilden, die einen Korb 8 tragen, der sich in Schieberichtung der Einkaufswagen 1, 1' verbreitert. Der Korb 8 weist einen nach vorne abfallend angeordneten Boden 11 auf, besitzt zwei spitzwinklig zueinander angeordnete Seitenwände 10, die hinten durch eine schmale niedrige Querwand 13 und vorne durch eine breite und höhere Querwand 14 verbunden sind. Die breite Querwand 14 ist um eine oben liegende horizontale Achse 15 in das Korbinnere nach oben verschwenkbar angeordnet. Im Anschluss an die schmale Querwand 13 folgt nach hinten eine Schiebeeinrichtung 17, etwa als Griffstange 18 gestaltet, die schmäler ist als die breite Querwand 14. Aus Fig. 3 ist die konisch gegenläufige Anordnung von Korb 8 und Fahrgestell 2 deutlich erkennbar. Fig. 4 wiederum zeigt zwei platzsparend ineinandergeschobene Einkaufswagen 1, 1", wobei der einzuschiebende Einkaufswagen 1' beim Ineinanderschiebevorgang mit seiner schwenkbaren breiten Querwand 14 gegen die schmale Querwand 13 des vorausbefindlichen Einkaufswagens 1 prallt, so dass die breite Querwand 14 des einzuschiebenden, in der Zeichnung rechts dargestellten Einkaufswagens 1' nach oben geschwenkt wird und der Einschiebevorgang so lange fortgeführt werden kann, bis dieser in jener Lage, wie zeichnerisch dargestellt, endet.

Anhand der dargestellten Ausführungsbeispiele ist es leicht vorstellbar, dass auf dem Boden 11 der Körbe 8 abgestellte Ware, insbesondere durch die beim Fahren auftretenden leichten Erschütterungen nach vorne in Richtung breite Querwand 14 rutscht. Die Einkaufswagen 1.1' lassen sich somit vom Rollstuhl aus bequem beladen.

Der Einkaufswagen 1, 1' kann in bekannter Weise mit einer Kopplungseinrichtung ausgestattet sein, die ein Ankoppeln des Einkaufswagens 1, 1' an einen Rollstuhl ermöglicht.

## Patentansprüche

1. Einkaufswagen (1, 1') für eine rollstuhlfahrende Person, mit einem Fahrgestell (2), das einen Korb (8) trägt und mit einer hinten angeordneten Schiebeeinrichtung (17), **dadurch gekennzeichnet, dass** der Boden (11) des Korbes (8) nach vorne abfallend angeordnet ist.

2. Einkaufswagen nach Anspruch 1, **dadurch gekennzeichnet, dass** der Korb (8) und das Fahrgestell (2) konisch gestaltet und gegenläufig angeordnet sind.

3. Einkaufswagen nach Anspruch 1 oder 2, **dadurch gekennzeichnet, dass** der Korb (8) eine schmale Querwand (13) aufweist, die sich hinten befindet und dass der Korb (8) vorne mit einer breiten Querwand (14) abschließt, die um eine horizontale Achse (15) in das Korbinnere verschwenkbar ist.

4. Einkaufswagen nach einem der Ansprüche 1 bis 3, **dadurch gekennzeichnet, dass** nach hinten, im Anschluss an die schmale Querwand (13), eine quer verlaufende Griffstange (18) folgt, welche die Schiebeeinrichtung (17) bildet, wobei die Griffstange (18) kürzer ist als die breite Querwand (14).
